## Europäisches Patentamt

## European Patent Office

## Office européen des brevets

(19)

(11) Publication number: **0 126 272**
**B1**

# EUROPEAN PATENT SPECIFICATION

(12)

(45) Date of publication of the patent specification:
27.08.86

(51) Int. Cl.⁴: **B 23 Q 7/10,** B 23 Q 3/155

(21) Application number: 84104080.1

(22) Date of filing: 12.04.84

(54) **Magazine for material and/or tools for robot or like applications.**

(30) Priority: 20.05.83 SE 8302859

(43) Date of publication of application:
28.11.84 Bulletin 84/48

(45) Publication of the grant of the patent:
27.08.86 Bulletin 86/35

(84) Designated Contracting States:
DE FR GB SE

(56) References cited:
EP - A - 0 028 735
DD - A - 106 582
DE - A - 2 509 762
DE - A - 3 012 989

(73) Proprietor: **International Business Machines
Corporation, Old Orchard Road, Armonk, N.Y. 10504 (US)**

(72) Inventor: **Lycke, Anders Hans, Stugvägen 9,
S-161 46 Bromma (SE)**
Inventor: **Söderqvist, Curt Rune, Mosaikvägen 20,
S-196 32 Kungsängen (SE)**

(74) Representative: **Ekström, Gösta E., IBM Svenska AB
Box 962, S-181 09 Lidingö (SE)**

## Description

The invention relates to a magazine for supplying materials and/or tools, for example, to an assembly robot or like system.

Modern assembly robots or like systems can work without human interaction for a long time. Pallets with tools and/or materials are under computer control fed into the work envelope of the robot by means of transport systems. Due to the limited space which is available within the work envelope of the robot, and the high working speed of the robot, the pallets with material and the pallets with assembled units must be changed very often. This affects the paid time ratio of the robot system.

According to prior known technique this problem has been solved by supplying material on a conveyor belt continuously running through the work envelope of the robot. Such a system requires, for example, exact positioning of the material on the conveyor belt and exact conveyor speed to make it possible for the robot gripper to find the detail needed.

The subject invention is intended to remedy the above mentioned drawbacks. It solves the problem by providing the pallets with special magazines, which can hold a great amount of different details and/or tools within a limited volume of the work envelope of the robot. The magazine is in the form of two chests of drawers, preferably mounted to a pallet, in a spaced relationship as claimed in claim 1. The drawers can selectively under computer control be moved to the free space between them and thereby making their content available for the robot gripper. Thus, a very compact material handling system is obtained. One embodiment of the invention, which is defined in the attached claims, is described more in detail below with reference to the attached drawings, of which

Figure 1 is a perspective view of a magazine in accordance with the embodiment,

Figure 2 shows how the drawers are supported,

Figure 3 is a cross-sectional view along A-A in Figure 1,

Figure 4 shows the selection mechanism.

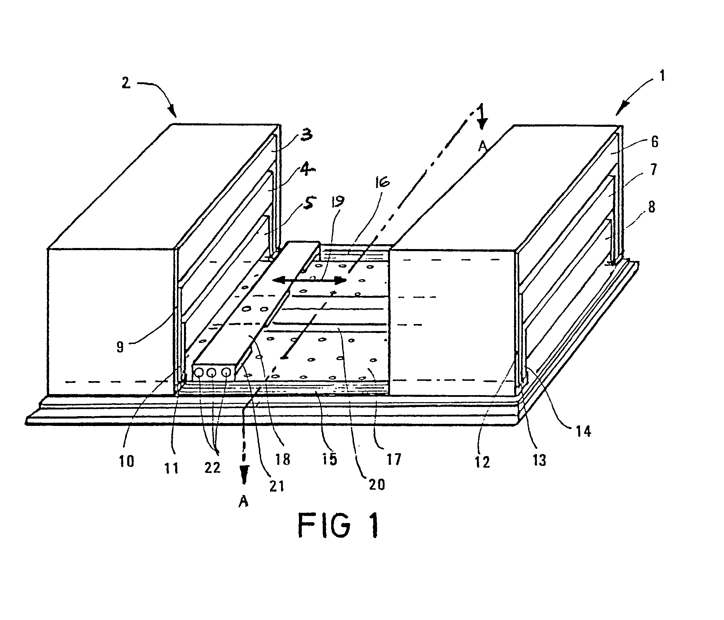

Figure 1 shows in perspective view a material and/or tool supply magazine in accordance with the embodiment. The magazine consists of two units in the form of two chests of drawers (1 and 2). Each device has several drawers (3-8), three in the figure, which are movably mounted on a pallet (17), spaced apart a distance equal to the depth of the chest of drawers. As described more in detail below the drawers (3-6) are supported by extended side walls (9-14) which extend down into grooves in two side members (15 and 16) which are fixedly mounted to the pallet (17). A follower member (18) is movable in two directions as indicated by the arrow (19) by means of a hydraulic or like means (20). The follower member is at each end provided with pneumatic or like cylinders (21) having follower pins (22). The follower pins are arranged to interact with indentations in the lower parts of the extended side walls of the drawers.

Thus, drawers can be selectively moved into the free space between the two units (1 and 2) whereby the content of the selected drawer is made available to the robot gripper.

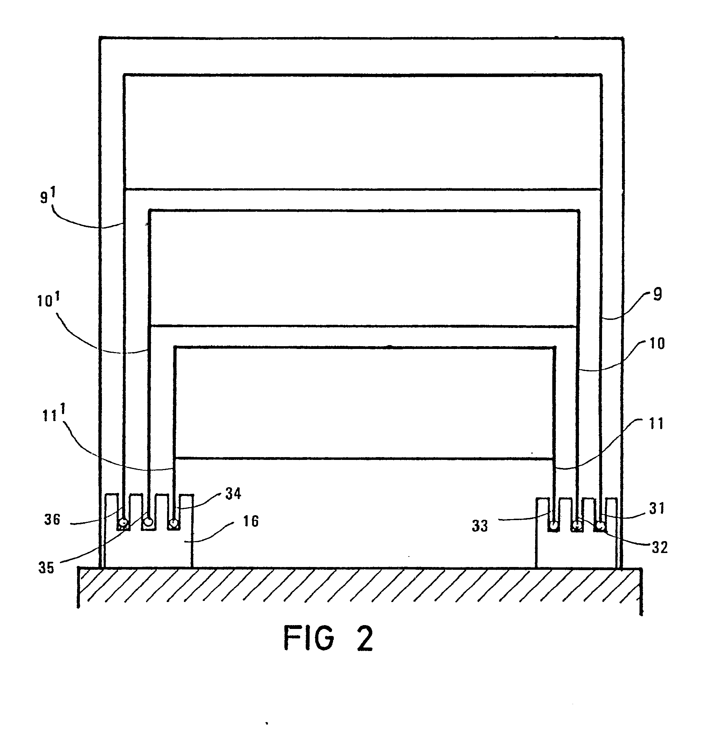

Figure 2 shows more in detail the support of the drawers (3, 4, 5) by means of extended side walls (9 to 11 resp. 9'-11'). The extended side walls extend down into grooves (31-33 resp. 34-36) in side members (15 and 16) fixedly mounted to the pallet. The drawers are movable along said grooves.

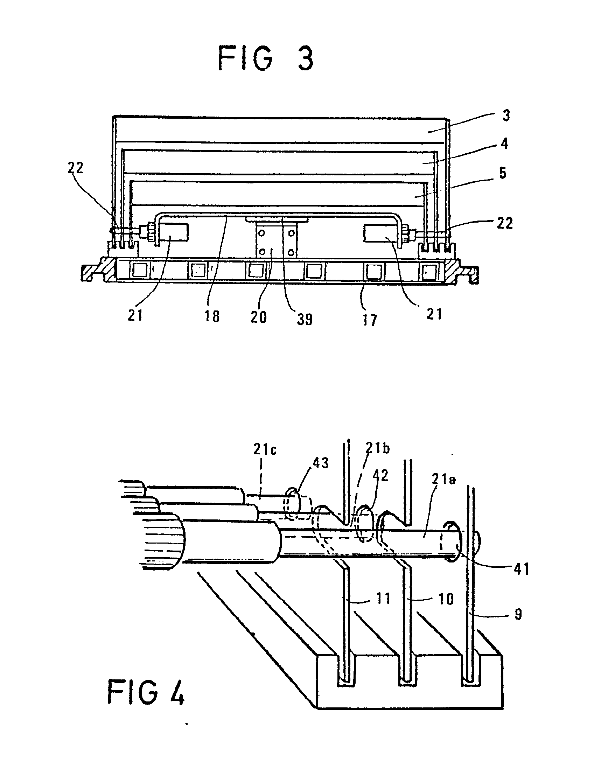

Figure 3 shows a cross-sectional view along line A-A in Figure 1. A hydraulic means (20) is fixedly mounted to the pallet (17). The follower member (18) is fixedly mounted to the movable part (39) of said hydraulic device. The follower member is in its both ends provided with pneumatic or like means (21) with follower pins (22).

Figure 4 shows an example of a selection mechanism. One follower pin (21a to 21c) at each end of the follower means (18) is provided for interaction with an indention (41, 42, 43) is an associated side wall extension. Thus, if for example, the follower pins (21a) one in each end of the follower means is first activated for interaction with the indention (41, as shown in Fig. 4) in the side walls (9 and 9') and then, the hydraulic means (20) is activated, the drawer 3 will be moved into the free space between the two magazine units.

According to an alternative embodiment of the invention, the drawers 5 and 8 may be fixedly mounted on the follower means 18 close to each other in such a way that said drawer 5 is placed in said free space when the follower means 18 is in one end position and said drawer 8 is placed in said free space when the follower means is in the other end position. Thus, two fewer cylinders 21 are needed in this embodiment.

## Claims

1. Magazine for supplying material and/or tools to a robot or like system, characterized by two sets (1, 2) of drawers (3-8) arranged in the form of two chests of drawers and positioned in a spaced relationship with a free space between the two sets, and means (18-27) for selectively moving said drawers into said free space.

2. Magazine according to claim 1, characterized in that said free space is equal to the depth of said chest of drawers (1, 2).

3. Magazine according to claims 1 and 2, characterized in that the drawers are provided with extended side walls (9-11, 9'-11') extending down into grooves (31-36) in two side members (15, 16).

4. Magazine according to claim 3, characterized by hydraulic or like means (20) with a follower member (18) attached to the movable part (39) of said hydraulic or like means (20), said follower means having at each end hydraulic or like cylinders (21) provided with follower pins (22) for interaction with indentations (41-43) in the lower parts of said extended side walls (9-11, 9'-11').

5. Magazine according to claim 4, characterized in that said hydraulic or like cylinders are selectively actuable for selective interaction with said indentions (41, 42 or 43).

6. Magazine according to claim 4 or 5, characterized in that the lower drawers (5, 8) are fixedly mounted to said follower member (18).

## Patentansprüche

1. Magazin zum Zuführen von Materialien und/oder Werkzeugen zu einem Roboter oder zu ähnlichen Systemen, gekennzeichnet durch zwei Gruppen (1, 2) von Schubladen (3-8), die in Form von zwei Kommoden angeordnet sind und einen Raum zwischen sich freilassen, und durch Vorrichtungen (18-27) zum selektiven Herausziehen der Schubladen in diesen Zwischenraum.

2. Magazin nach Anspruch 1, dadurch gekennzeichnet, dass der Zwischenraum gleich der Tiefe der Kommoden (1, 2) ist.

3. Magazin nach Anspruch 1 und 2, dadurch gekennzeichnet, dass die Schubladen verlängerte Seitenwände (9-11, 9'-11') aufweisen, die bis zu in zwei seitlich angeordneten Teilen (15, 16) vorgesehenen Nuten (31-36) verlaufen.

4. Magazin nach Anspruch 3, gekennzeichnet durch eine hydraulische oder dergl. Einrichtung (20) mit Schieber (18), welcher an dem bewegbaren Teil (39) der hydraulischen oder dergl. Einrichtung (20) befestigt ist, wobei der Schieber an seinen Enden hydraulische oder dergl. Zylinder (21) mit Stiften (22) aufweist, welche in die in den unteren Bereichen der verlängerten Seitenwände (9-11, 9'-11') vorgesehenen Ausnehmungen (41-43) eingreifen.

5. Magazin nach Anspruch 4, dadurch gekennzeichnet, dass die hydraulischen oder dergl. Zylinder selektiv zum selektiven Eingriff in die Ausnehmungen (41, 42 bzw. 43) aktiviert werden können.

6. Magazin nach Anspruch 4 oder 5, dadurch gekennzeichnet, dass die unteren Schubladen (5, 8) fest am Schieber (18) befestigt sind.

## Revendications

1. Magasin d'alimentation en matériels et (ou) en outils destinés à un robot ou à un système analogue, caractérisé en ce qu'il comprend deux séries (1, 2) de tiroirs (3 à 8) disposées sous la forme de deux meubles à tiroirs et positionnées en une disposition mutuelle d'espacement relatif, laissant un espace libre entre les deux séries, et un moyen (18 à 27) de déplacer sélectivement les tiroirs dans l'espace libre ainsi ménagé.

2. Magasin suivant la revendication 1, caractérisé en ce que l'espace libre ainsi ménagé est égal à la profondeur du meuble (1, 2) à tiroirs.

3. Magasin suivant les revendications 1 ou 2, caractérisé en ce que les tiroirs sont dotés de parois latérales allongées (9 à 11, 9' à 11') s'étendant vers le bas dans des glissières (31 à 36) formées dans deux pièces latérales (15, 16).

4. Magasin suivant la revendication 3, caractérisé en ce qu'il comprend un moyen (20), hydraulique ou analogue, avec une pièce satellite (18) rattachée à la pièce mobile (39) du moyen (20) hydraulique ou analogue, le moyen satellite portant à chaque extrémité des vérins (21) hydrauliques ou analogues, pourvus de broches satellites (22) pour interaction avec des indentations (41 à 43) dans les parties inférieures des parois latérales allongées (9 à 11, 9' à 11').

5. Magasin suivant la revendication 4, caractérisé en ce que les vérins hydrauliques ou analogues sont actionnables sélectivement pour des interactions sélectives avec les indentations (41, 42 ou 43).

6. Magasin suivant les revendications 4 ou 5, caractérisé en ce que les tiroirs inférieurs (5, 8) sont montés à demeure sur la pièce satellite (18).

FIG 1

FIG 2

# FIG 3

# FIG 4